# EUROPÄISCHE PATENTSCHRIFT

(11) **EP 1 581 429 B1**
(45) Veröffentlichungstag und Bekanntmachung des Hinweises auf die Patenterteilung: **02.05.2007**
(21) Anmeldenummer: 03789384.9
(22) Anmeldetag: 22.12.2003
(51) Int. Cl.: B65B 25/06, B65B 9/12, A22C 11/00, A23L 1/31, B65B 39/00

(54) **VERFAHREN ZUR INDUSTRIELLEN VERPACKUNG, ZUM HALTBARMACHEN UND/ODER OBERFLÄCHENBEHANDELN VON LEBENSMITTELN, INSBESONDERE BRÄT**
INDUSTRIAL PACKAGING METHOD FOR THE PRESERVATION AND/OR SURFACE TREATMENT OF FOODSTUFFS, IN PARTICULAR SAUSAGE MEAT
PROCEDE POUR L'EMBALLAGE INDUSTRIEL, LA CONSERVATION ET/OU LE TRAITEMENT SUPERFICIEL DE DENREES ALIMENTAIRES, NOTAMMENT DE CHAIR A SAUCISSE

(30) Priorität: 08.01.2003 DE 10300272; 28.01.2003 DE 10303274; 15.05.2003 DE 10321923; 21.08.2003 DE 10338482
(43) Veröffentlichungstag der Anmeldung: 05.10.2005
(73) Patentinhaber: Kortschack, Fritz, 14089 Berlin (DE)
(72) Erfinder: Kortschack, Fritz, 14089 Berlin (DE)
(74) Vertreter: Kruspig, Volkmar
(86) Internationale Anmeldenummer: PCT/EP2003/014743
(87) Internationale Veröffentlichungsnummer: WO 2004/063016

(56) Entgegenhaltungen:
- EP-A- 0 567 309
- DE-A- 3 447 351
- US-A- 6 135 869

## Beschreibung

Die Erfindung betrifft ein Verfahren zur industriellen Verpackung und zum Haltbarmachen sowie Oberflächenbehandeln von Lebensmitteln, insbesondere Brät, unter Verwendung eines folienartigen, elastische Eigenschaften aufweisenden Kunststoffmaterials, wobei das Lebensmittel, auch als Halbfertigprodukt, von dem Kunststoffmaterial umhüllt und versiegelt wird, gemäß Oberbegriff des Patentanspruchs 1.

Aus der DE 39 08 585 C2 ist eine elastische Umhüllung zum Formen von Fleisch vorbekannt. Gemäß der dortigen Aufgabe gilt es, das Fleisch im verpackten Zustand in eine kreisförmige Form zu überführen, wobei die Umhüllung ein dauerelastischer Schlauch oder Beutel ist, der sich fest auf das Fleisch legt, indem er sich im Querschnitt zusammenzieht. Der Schlauch oder Beutel kann aus zwei übereinander gelegten Folienbändern bestehen, welche an ihren Längsrändern miteinander verschweißt sind. Ergänzend besteht gemäß DE 39 08 585 C2 die Möglichkeit, dass dem Schlauch oder Beutel nach Einfüllen des Fleisches die Luft entzogen wird. Formgebungsunterstützend ist ein konisches Teil vorgesehen, wobei der Schlauch oder Beutel sich mindestens teilweise auf diesem Zusatzteil befindet, welches mit der Fleischzufuhreinrichtung in Verbindung steht.

Bei dem Verfahren zum Verpacken von Gegenständen und/oder Objekten in einer Verpackungsvorrichtung gemäß EP 0 836 998 B1 wird wiederum von einem elastischen Verpackungsmaterial ausgegangen, das in ein Behältnis eingebracht wird, bei dem ein atmosphärischer Unterdruck erzeugt ist, und zwar derart, dass das Verpackungsmaterial in dem Behältnis durch den vorhandenen, auf das Verpackungsmaterial wirkenden äußeren Luftdruck gedehnt wird, so dass ein Hohlraum entsteht, in den der oder die zu verpackenden Gegenstände in dem gedehnten Verpackungsmaterial angeordnet werden. Nachdem der Unterdruck aufgehoben wird, stellt sich das elastische Verpackungsmaterial zurück mit der Folge, dass sich dieses wenigstens teilweise an den verpackten Gegenstand anlegt. Weiterhin wird das Verpackungsmaterial als Folienbahn oder als Folienschlauch fortlaufend zugeführt und es ist eine Vorrichtung ausgebildet, die in der Lage ist, das Verpackungsmaterial zu versiegeln.
Nachteilig ist bei dieser Lehre, dass grundsätzlich atmosphärischer Unterdruck erzeugt werden muß, um den gewünschten Hohlraum zur Aufnahme der zu verpackenden Gegenstände zu erzeugen.

Aus der DE 198 07 794 C2 ist ein Verfahren zur Herstellung und zur Formgebung von Lebensmitteln, wie z.B. Fleisch- und Wurstwaren, vorbekannt, wobei dort ein Halbfertigprodukt in einen Beutel oder zwischen Folien gebracht wird, das Halbfertigprodukt vakuumbehandelt und verschlossen wird, die gefüllte Packung zwischen zwei Platten justiert und unter Aufbringen eines leichten Druckes auf die Packung eine Gleichverteilung des Packungsinhalts erfolgt.
Gemäß der dortigen Lösung wird die gefüllte Packung zwischen zwei Tiefziehplatten einer Hoch- und/oder Tiefziehmaschine verbracht, wobei bei entsprechend vorhandenen Ausmuldungen in den Tiefziehplatten eine bleibende Verformung eintritt. Diese bleibende Verformung des Füllmaterials wird bedingt, indem zwischen Tiefziehplatten und Packung ein Unterdruck erzeugt wird und die Packungswandungen sich dadurch an die Form der Ausmuldungen anlegen. Hierbei wird die Folie gedehnt und an die vorhandenen Mulden angepreßt. Gleichzeitig wird das Brät durch weitere Verringerung des Plattenabstands vollständig in die Mulden gedrängt, so dass die nicht ausgeformten Folien plan aufeinanderliegen. Die plan aufeinanderliegenden Folienbereiche können dann versiegelt werden, wobei durch formunterstützende Gatter auch definierte Packungsgrößen vorgebbar sind.

Die vorstehend beschriebene Verfahrensweise ist zwar geeignet, die Bearbeitungsschritte der Verpackung und Haltbarmachung von Lebensmitteln zu vereinfachen, jedoch ist es problematisch, das Halbfertigprodukt, insbesondere ein Brät, im Sinne einer Farbgebung, eines definierten Geschmacks oder zum Zweck des Überziehens mit einer Schicht aus einem anderen Lebensmittel zu behandeln.

Aus der gattungsbildenden US-PS 6,135,869 ist ein Verfahren zur industriellen Verpackung, zum Haltbarmachen und/oder Oberflächenbehandeln von Lebensmitteln, insbesondere Brät, unter Verwendung eines folienartigen, elastische Eigenschaften aufweisenden Kunststoffmaterials vorbekannt, wobei das Lebensmittel von dem Kunststoffmaterial umhüllt und versiegelt wird. Dort ist eine Anordnung, aus mehreren in einer Ebene parallel verlaufenden Füllrohren gleichen oder unterschiedlichen Querschnitts fülleingangsseitig mit einer Lebensmittel-Zuführeinrichtung in Verbindung stehend, vorgesehen, wobei das Folienmaterial beidseitig der Füllrohrebene kontinuierlich oder diskontinuierlich zugeführt wird. Im Anschluß erfolgt ein dichtes Verschließen des Folienmaterials, wobei vor dem ersten Füllvorgang eine Quersiegelnaht auszuführen ist. Mit Hilfe des vorbekannten Verfahrens können insbesondere Würste hygienisch verpackt und so in den Verkehr gebracht werden.

Aus dem Vorgenannten ist es daher Aufgabe der Erfindung, ein weiterentwickeltes Verfahren zur industriellen Verpackung und zum Haltbarmachen sowie Oberflächenbehandeln von Lebensmitteln, insbesondere Brät, anzugeben, wobei das Verfahren auf die Verwendung eines folienartigen, elastischen Kunststoffmaterials zurückgeht und das Lebensmittel, auch als Halbfertigprodukt, von dem Kunststoffmaterial umhüllt und versiegelt wird. Das Verfahren ist so auszugestalten, dass auch gleichzeitig eine Oberflächenbehandlung innerhalb des Füllvorgangs, d.h. innerhalb einer einzigen technologischen Kette, realisierbar ist.

Die Lösung der Aufgabe der Erfindung erfolgt mit einem Verfahren in seiner Definition gemäß der Lehre nach Patentanspruch 1, wobei die Unteransprüche zweckmäßige Ausgestaltungen und Weiterbildungen darstellen.

Demnach wird von einer Anordnung aus mehreren, beabstandeten, vorzugsweise in einer Ebene parallel verlaufenden Füllrohren gleichen oder unterschiedlichen Querschnitts ausgegangen, welche fülleingangsseitig mit einer Lebensmittel-Zuführeinrichtung in Verbindung steht.

Das Folienmaterial wird beidseitig der Füllrohrebene kontinuierlich oder diskontinuierlich zugeführt. Anschließend wird das zugeführte Folienmaterial, welches aus zwei Folienbahnen, aus einer gefalteten Folie oder als langgestreckter Beutel ausgebildet sein kann, zwischen den Füllrohren, diese außenumfangsseitig eng und dicht umschließend, verbunden.

Vor dem ersten Füllvorgang wird, wenn nicht bereits bei der Ausführungsform der Folie als Beutel vorhanden, eine Quersiegelnaht ausgeführt.

Mit einsetzendem Füllvorgang wird das Lebensmittel, insbesondere Brät, in den Folienzwischenraum eingepreßt, wobei sich über das elastische Folienmaterial und die Steuerung der Relativgeschwindigkeit zwischen Folie und Füllrohraustritt ein Gegendruck zur lufteinschlußfreien Verpackung einstellt.

Zum Abschluß des jeweiligen Füllschritts wird dann, in Abhängigkeit von der Verpackungsgröße und/oder der Füllmenge, eine Quersiegelnaht erzeugt und es beginnt ein neuer Füllschritt im nächsten Abschnitt der zugeführten bzw. weitertransportierten Kunststoff-Folie.

Zum Erhalt der gewünschten Flexibilität der Folie kann diese vor und/oder während des Füllvorgangs erwärmt werden.

Formgebungsunterstützend oder formgebungsstabilisierend können die sich ausbildenden Folienschläuche während des Füllvorgangs von einem starren, schalenförmigen, insbesondere halbschalenförmigen Mantel umgeben sein.

Dieser Mantel kann die gefüllten Folien zur Ausführung der exakten Querversiegelung stabilisieren oder aber auch eine Strukturierung der Folie und damit des Füllgutes bewirken.

Die Füllrohraustritte der Anordnung, vzw. bestehend aus mehreren Füllrohren, weisen jeweils eine Düse auf, wobei erfindungsgemäß am jeweiligen Füllrohraustritt diese Düse als Injektordüse ausgeführt ist, um während des Füllvorgangs ein gleichmäßiges Beaufschlagen des Lebensmittels oder Füllgutes mit Farb-, Geschmacks- oder Dekorstoffen zu bewirken.

Die Füllrohre sind erfindungsgemäß, doppelwandig ausgeführt oder bestehen aus zwei konzentrischen Rohren, welche einen Zwischenraum zum Zuführen der Farb-, Geschmacks- oder Dekorstoffe aufweisen.

Ausgestaltend besteht die Möglichkeit, zwischen den Längs- und/oder Quersiegelnähten eine Perforation zum späteren Trennen in Einzel- oder Gruppenverpackungen vorzusehen.

Bei einer weiteren Ausgestaltung der Erfindung werden die Folieninnenseiten vor dem Befüllen mit dem Füllgut mit einem, vorzugsweise erwärmten, Gemisch aus einem Behandlungsstoff und Trägermaterial beaufschlagt, wobei anschließend durch Kühlen das Gemisch verfestigbar ist. Beim späteren Haltbarmachen des Füllgutes durch Wärmebehandlung geht das Gemisch aus Behandlungsstoff und Trägermaterial zeitweise in den flüssigen Zustand über und es tritt hierdurch eine gewünschte gleichmäßige Verteilung auf der Oberfläche des Halbfertigprodukts ein. Eine solche Oberfächenbehandlungs-Methodik kann auch dann erfolgen, wenn aus bestimmten technologischen Gründen die Anordnung einer konzentrischen Rohranordnung nicht möglich ist oder die Oberflächenbehandlung quasi zweistufig vorgenommen werden soll.

Nach dem Aufbringen des erwärmten Gemisches aus Behandlungsstoff und Trägermaterial auf die Folien wird deren Temperatur durch Anblasen mit Kühlluft reduziert, um eine gewünschte Verfestigung des Gemisches auf der Folienoberfläche zu bewirken.

Das vorstehend erwähnte Gemisch nimmt bevorzugt bei Raumtemperatur und darunter einen pastösen bis teigigen Zustand ein und geht bei Erwärmung in einen flüssigen Aggregatzustand über.

Der Behandlungsstoff kann ein Pulver oder Gas sein, das mit der im Füllgut enthaltenen Feuchte, welches dann quasi als Trägermaterial wirkt, reagiert und eine Oberflächenschicht in der gewünschten Weise ausbildet.

Der ergänzende Grundgedanke der Erfindung besteht also darin, die Beutel- oder Folieninnenseiten vor dem Befüllen mit dem Halbfertigprodukt, insbesondere Brät, mit einem vorzugsweise erwärmten Gemisch aus einem Behandlungsstoff und Trägermaterial zu beaufschlagen. Dieses Gemisch aus Behandlungsstoff und Trägermaterial ist z.B. bestehend aus Geschmacksbildnern, Geruchsstoffen und/oder Dekorstoffen sowie Gelatine, Fetten, Fettgemischen oder dergleichen.

Der Behandlungsstoff kann aber auch ein Käse oder käseartiger Stoff sein, um z.B. ein Halbfertigprodukt zu erhalten, das mit einer Käseschicht als Oberflächenabdeckung versehen ist.
Bei einer ergänzenden Ausgestaltung ist der Behandlungsstoff ein Pulver, welches, wie oben erwähnt, mit der im Brät befindlichen Feuchte reagiert. Hier kann ein separates Trägermaterial entfallen. Der Behandlungsstoff kann ein Pulver oder Rauchpulver sein, welches auf das Brät aufgebracht wird und das mit der Feuchtigkeit des Bräts reagiert, d.h. zunächst in einen breiig-pastösen Zustand übergeht und dann gegebenenfalls flüssig wird. Hier besteht dann die Möglichkeit, auf eine der Folien, z.B. die sich bewegende Unterfolie, unmittelbar bevor die Folie in Richtung Füllrohr verbracht wird, ein Pulver aufzubringen, insbesondere zu streuen. Das dann eingefüllte Brät kommt mit dem Pulver in Kontakt und es bildet sich innerhalb des Bräts eine gebundene, gegebenenfalls färbende, breiige Schicht aus, die das Brät an der Kontakt- oder Auflagefläche gezielt verändert.

Eine mögliche Wärmebehandlung, z.B. einhergehend mit dem Schritt des Haltbarmachens, ermöglicht eine nochmalige Änderung der Viskosität der Oberflächenschicht mit der Folge, dass sich ein gleichmäßigeres Benetzen bzw. eine gleichmäßige Verteilung auf der Oberfläche des Bräts ergibt.

Mit der erfindungsgemäßen Lösung gelingt es, eine wesentliche Verbesserung bei der industriellen Verpackung zum Zweck des Haltbarmachens von Lebensmitteln zu erreichen, die nicht davon ausgeht, ein mit Brät gefülltes Kissen in einzelne Brätstränge zu unterteilen und anschließend weiter zu behandeln, sondern es wird vielmehr ein vom Grundsatz her kontinuierlicher Füllvorgang unter Nutzung bekannter Füllrohre zur Anwendung gebracht. Demnach wird das Brät durch einzelne, parallel geführte Füllrohre in Folienschläuche gepreßt, welche dadurch entstehen, dass die Kunststoff-Folienbahnen ausgeformt und durch Siegelnähte verbunden sind und hierbei mindestens Teilabschnitte in Längsrichtung der Füllrohre ummanteln.

Die Füllrohre sind fülleingangsseitig mit einer Lebensmittel-Zuführeinrichtung verbunden. Die Füllrohre können unterschiedliche Querschnitte aufweisen, so dass in einer einzigen Anlage verschiedene Wurstgrößen bzw. Verpackungseinheiten unterschiedlicher Inhalte erstellt werden können.

Das Zuführen der Folien oberhalb und unterhalb der Rohrebene geschieht in bekannter Weise. Die Längsnähte werden durch Aufeinanderpressen z.B. durch beheizte Siegelrollen, Siegelbahnen oder mit Hilfe von Ultraschall-Vorrichtungen erzeugt.

Wie bereits angedeutet; können anstatt zweier Folienbahnen auch gefaltete Folien eingesetzt werden, um den Aufwand für die Randversiegelung zu reduzieren. Wesentlich ist die Beschaffenheit der Folie, deren Dehnbarkeit grundsätzlich temperaturabhängig ist. Bei Folien, die nicht bereits im kalten Zustand ausreichend elastisch sind, ist verfahrensseitig für eine ausreichende Erwärmung Sorge zu tragen.

Bei der Befüllung der Folienstränge muß das Umschließen der Füllrohre durch die Folien so realisiert werden, dass das Eindringen von Luft in die zu schaffende Verpackung verhinderbar ist.

Der durch die Folie ausgeübte Gegendruck beim Füllvorgang kann durch die sich anschließende Hitze- und Kältebehandlung der Packungen noch unterstützt werden.

Bei der Beschreibung der Erfindung wird zunächst davon ausgegangen, dass sich die Folienbahnen, die zu den Folienschläuchen gefügt wurden, beim Füllvorgang von der Füllaustrittsseite weg bewegen, und zwar so lange, bis die gewünschte Verpackungsform oder Verpackungsgröße erreicht ist.

Alternativ kann jedoch auch ein quasi repetierender Füllvorgang erfolgen, wobei sich hier die Füllrohre entgegen der Bewegungsrichtung der Folienbahn um einen vorgegebenen Abschnitt zurückbewegen, dann nach Abschluß des Füllvorgangs die Quersiegelnaht ausgeführt wird, ein Weitertransport der Folienbahnen mit Vorwärtsbewegen der Füllrohre in die Ausgangsposition erfolgt und sich im nächsten Schritt der Füllvorgang im nächsten Bahnabschnitt wiederholt.

Bezüglich der vorteilhaften Oberflächenbehandlung von Lebensmitteln, die dann einem Verpackungsschritt unterzogen werden, sei auf nachstehendes Ausführungsbeispiel verwiesen.

Gemäß einem aus der DE 198 07 794 C2 bekannten Verfahren zur Herstellung und Formgebung von Lebensmitteln, wie z.B. Fleisch- und Wurstwaren, wird nunmehr vor dem Befüllen der Folienbeutel bzw. der Folien ein erwärmtes Gemisch aus Behandlungsstoff und Trägermaterial auf die Folien aufgebracht. Dieses kann durch Besprühen oder Bestreichen erfolgen. Der Behandlungsstoff ist hier ein Farbstoff, Flüssigrauch oder ein Dekorstoff, wobei das Trägermaterial Gelatine oder Fett ist.

Das aufgebrachte Gemisch haftet unmittelbar auf der Folie, wobei nach dem warmen Auftragen eine Kühlung durch Anblasen der Folie, z.B. mittels kalter Luft, vorgenommen wird.
Die Befüllung mit Brät, wobei die Brättemperatur ca. 12°C beträgt, erfolgt dann in an sich bekannter Weise.

Das Brät in den tiefgezogenen Folien, wobei hier nochmals auf den Offenbarungsinhalt der DE 198 07 794 C2 verwiesen wird, kann auf der nicht umhüllten Oberfläche direkt mit dem Gemisch behandelt werden, bevor eine Deckfolie auf die befüllte Unterfolie plaziert wird und nach einer eventuellen Vakuumbehandlung des Bräts die Oberfolie mit der Unterfolie an definierten Stellen verbunden, insbesondere verschweißt wird. Bezüglich dieses Verfahrens sei auf den Offenbarungsinhalt nach DE 39 11 463 C2 aufmerksam gemacht.

Selbstverständlich kann das Gemisch auch auf die Deck- oder Oberfolie aufgebracht werden oder eine Kombination des Gemischaufbringens Brät/ Deckfolie vorgenommen werden.

Die formgebenden Elemente, insbesondere Platten, können erwärmt sein, um die Plastizität der eingesetzten Folien zu verbessern. Die Erwärmung kann hier durch Einsatz einer Temperflüssigkeit vorgenommen werden.

Beim folgenden Schritt der Haltbarmachung des Halbfertigprodukts durch Hitzeeinwirkung wird das aufgebrachte Gemisch aus Behandlungsstoff und Trägermaterial flüssig und legt sich um das Brät, wodurch der gewünschte Erfolg einer gleichmäßigen Oberflächenbehandlung gegeben ist. Nach dem Pasteurisieren und dem Abkühlen der Packung liegen dann oberflächenbehandelte einzelne Würste vor, die sich wenig von traditionell gefertigten Produkten unterscheiden.

Bei einem weiteren Ausführungsbeispiel ist der Behandlungsstoff ein Pulver oder Rauchpulver, welches auf das Brät aufgebracht wird und das mit der Feuchtigkeit des Bräts reagiert, d.h. zunächst in einen breiig-pastösen Zustand übergeht und dann gegebenenfalls flüssig wird.

Hier besteht die Möglichkeit, auf eine bei einem kontinuierlichen Prozeß sich bewegende Unterfolie, unmittelbar bevor das Brät auf diese Folie verbracht wird, Pulver aufzubringen, insbesondere zu streuen. Das aufgebrachte Brät deckt dann das Pulver ab und es bildet sich unterhalb des Bräts eine gebundene, gegebenenfalls färbende, breiige Schicht, die das Brät an der Kontakt- oder Auflagefläche gezielt verändert.

In dem Falle, bevor eine Oberfolie über das Brät gezogen oder aufgelegt wird, besteht die Möglichkeit, das Brät mit dem vorerwähnten Pulver zu bestreuen, wobei sich auch hier eine feuchte Deckschicht bildet, die auf der Produktoberfläche haftet.

Nach dem Verbinden der Ober- und Unterfolie, wobei es zur Herstellung von Packungen unerläßlich ist, dass die Außennähte der Packungen dauerhaft, z.B. durch Verschweißen miteinander verbunden sind, verteilt sich die Behandlungsflüssigkeit unter Einfluß der Temperierung und des Packungsdrucks über die gesamte Oberfläche des Bräts. Während des fortschreitenden Produktionsprozesses wird die Brätoberfläche bzw. die Oberfläche einer einzelnen Wurst dauerhaft verändert, z.B. gefärbt. Die erhaltene Produktoberfäche ist mit derjenigen eines konventionell gefertigten Produkts vergleichbar.

Bei diesem Ausführungsbeispiel ändert sich der Zustand des aufgebrachten Pulvers in eine teigig-pastöse Form bzw. in eine flüssige Phase. Sollte es beim Aufbringen des Pulvers, z.B. durch Streuen, noch nicht zu einer geschlossenen Oberflächenbeschichtung gekommen sein, dann sorgt die Wärmebehandlung beim Schritt des Haltbarmachens für eine nochmalige Änderung der Viskosität der Oberflächenschicht mit der Folge, dass sich ein gleichmäßiges Benetzen bzw. eine gleichmäßige Verteilung auf der Oberfläche des Bräts ergibt.

## Patentansprüche

1. Verfahren zur industriellen Verpackung, zum Haltbarmachen und/oder Oberflächenbehandeln von Lebensmitteln, insbesondere Brät, unter Verwendung eines folienartigen, elastische Eigenschaften aufweisenden Kunststoffmaterials, wobei das Lebensmittel, auch als Halbfertigprodukt, von dem Kunststoffmaterial umhüllt und versiegelt wird, wobei eine Anordnung aus einem, bevorzugt mehreren, beabstandeten, vorzugsweise in einer Ebene parallel verlaufenden Füllrohren gleichen oder unterschiedlichen Querschnitts fülleingangsseitig mit einer Lebensmittel-Zuführeinrichtung in Verbindung steht, wobei das Folienmaterial beidseitig der Füllrohrebene kontinuierlich oder diskontinuierlich zugeführt wird,
anschließend das zugeführte Folienmaterial zwischen den Füllrohren und in den Randbereichen, diese außenumfangsseitig eng und dicht umschließend, in Längsrichtung verbunden wird,
vor dem ersten Füllvorgang eine Quersiegelnaht ausgeführt ist,
mit einsetzendem Füllvorgang das Lebensmittel in den Folienzwischenraum eingepreßt wird, wobei sich über das elastische Folienmaterial und die Steuerung der Relativgeschwindigkeit zwischen Folie und Füllrohraustritt ein Gegendruck zur lufteinschlußfreien Verpackung einstellt, sowie zum Abschluß des jeweiligen Füllschritts in Abhängigkeit von der Verpackungsgröße und/oder Füllmenge eine weitere Quersiegelnaht erzeugt wird und ein erneuter Füllschritt beginnt,
**dadurch gekennzeichnet, dass**
während des Füllvorgangs das Lebensmittel oder Füllgut gleichmäßig mit Farb-, Geschmacks- und/oder Dekorstoffen mittels einer am jeweiligen Füllrohraustritt vorhandenen Injektordüse beaufschlagt wird, wobei hierfür die Füllrohre doppelwandig ausgeführt sind oder aus zwei konzentrischen Rohren bestehen, welche einen Zwischenraum zum Führen der Farb-, Geschmacks- und/oder Dekorstoffe aufweisen.

2. Verfahren nach Anspruch 1,
**dadurch gekennzeichnet, dass**
zum Erhalt der gewünschten Folienelastizität diese vor und/oder während des Füllvorgangs erwärmt wird.

3. Verfahren nach Anspruch 1 oder 2,
**dadurch gekennzeichnet, dass**
zur Formgebung oder Formstabilisierung die sich ausbildenden Folienschläuche während des Füllvorgangs von einem starren, schalenartigen Mantel umgeben sind.

4. Verfahren nach Anspruch 3,
**dadurch gekennzeichnet, dass**
der Mantel aus zwei komplementären Halbschalen besteht.

5. Verfahren nach einem der vorangegangenen Ansprüche,
**dadurch gekennzeichnet, dass**
der Füllvorgang unterdruckunterstützt vorgenommen wird.

6. Verfahren nach Anspruch 3 oder 4,
**dadurch gekennzeichnet, dass**
der Mantel die gefüllten Folien zur Ausführung der exakten Querversiegelung stabilisiert.

7. Verfahren nach einem der vorangegangenen Ansprüche,
**dadurch gekennzeichnet, dass**
zwischen den Längs- und/oder Quersiegelnähten eine Perforation zum Trennen in Einzel- oder Gruppenverpackungen ausgebildet wird.

8. Verfahren nach einem der vorangegangenen Ansprüche,
**dadurch gekennzeichnet, dass**
die Folieninnenseiten vor dem Befüllen mit dem Füllgut mit einem vorzugsweise erwärmten Gemisch aus einem Behandlungsstoff und Trägermaterial beaufschlagt werden, wobei anschließend durch Kühlen das Gemisch verfestigt wird.

9. Verfahren nach Anspruch 8,
**dadurch gekennzeichnet, dass**
beim Haltbarmachen des Füllgutes durch Wärmebehandlung das Gemisch aus Behandlungsstoff und Trägermaterial zeitweise in den flüssigen Zustand übergeht und hierdurch eine gewünschte gleichmäßige Verteilung auf der Oberfläche des Füllgutes eintritt.

10. Verfahren nach Anspruch 8 oder 9,
**dadurch gekennzeichnet, dass**
nach dem Aufbringen des erwärmten Gemisches aus Behandlungsstoff und Trägermaterial auf die Folien deren Temperatur durch Anblasen mit Kühlluft reduziert wird, um die gewünschte Verfestigung des Gemisches auf der Folienoberfläche zu erreichen.

11. Verfahren nach einem der Ansprüche 8 bis 10,
**dadurch gekennzeichnet, dass**
das Gemisch bei Raumtemperatur und darunter einen pastösen bis teigigpastösen Zustand einnimmt und bei Erwärmung in den flüssigen Aggregatzustand übergeht.

12. Verfahren nach einem der Ansprüche 8 bis 11,
**dadurch gekennzeichnet, dass**
der Behandlungsstoff ein Pulver oder ein Gas ist, das mit der im Füllgut enthaltenen Feuchte, welche dann als Trägermaterial wirkt, reagiert und eine Oberflächenschicht ausbildet.

## Claims

1. Method of industrial packaging for the preservation and/or surface treatment of foodstuffs, in particular sausage meat, using a film-type plastic material possessing elastic properties, the foodstuff, even as a semi-finished product, being enveloped and sealed in the plastic material, wherein an arrangement of one, preferably several, spaced filling tubes, preferably running parallel on a plane and having identical or different cross sections, is connected on the filling inlet side to a food supply device, wherein the film material is supplied continuously or intermittently on both sides of the filling tube plane,
the film material supplied is then connected lengthways between the filling tubes and in the peripheral areas, enclosing the latter tightly and hermetically on the outer periphery,
a transverse sealed seam is formed prior to the first filling operation,
in the following filling operation the food is pressed into the space between the film, a counter-pressure being created through the elastic film material and the control of the relative speed of film and filling tube outlet to produce the airtight packaging, and, to conclude the particular filling step, a further transverse sealed seam is created depending on the size of the packaging and/or filling quantity, and a new filling step commences,
**characterised in that**,
during the filling operation, the food or filling material is evenly subjected to colorants, flavours and/or decorative substances by means of an injector nozzle located at the particular filling tube outlet, wherein the filling tubes for this purpose are embodied with double walls or consist of two concentric tubes which have a space between for carrying the colorants, flavours and/or decorative substances.

2. Method according to Claim 1,
**characterised in that**,
to preserve the desired elasticity of the film, the latter is heated prior to and/or during the filling operation.

3. Method according to Claim 1 or 2,
**characterised in that**,
to give shape or stabilise the shape, the developing tubes of film are enclosed during the filling operation by a rigid, shell-like jacket.

4. Method according to Claim 3,
**characterised in that**
the jacket consists of two complementary half-shells.

5. Method according to one of the previous claims,
**characterised in that**
the filling operation is carried out in a vacuum-supported manner.

6. Method according to Claim 3 or 4,
**characterised in that**
the jacket stabilises the filled films to execute the exact transverse sealing.

7. Method according to one of the previous claims,
**characterised in that**
a perforation is configured between the longitudinal and/or transverse sealed seams for separating into individual or collective packs.

8. Method according to one of the previous claims
**characterised in that**,
prior to filling with the filling material, the insides of the film are stuffed with a preferably heated mixture of a treatment material and carrier material, wherein the mixture is then solidified by cooling.

9. Method according to Claim 8,
**characterised in that**,
in preserving the filling material by heat treatment, the mixture of treatment material and carrier material temporarily changes into the fluid state and results in a desired even distribution on the surface of the filling material.

10. Method according to Claim 8 or 9,
**characterised in that**,
after applying the heated mixture of treatment material and carrier material to the films, the temperature of the latter is reduced by blowing with cool air in order to achieve the desired solidification of the mixture on the film surface.

11. Method according to Claims 8 to 10,
**characterised in that**
the mixture takes on a paste-like or doughy paste-like state at room temperature and below, and changes into the fluid aggregate state on heating.

12. Method according to one of the Claims 8 to 11,
**characterised in that**
the treatment material is a powder or gas that reacts with the moisture contained in the filling material, which moisture then acts as a carrier material, and forms a surface layer.

## Revendications

1. Procédé pour l'emballage industriel, la conservation et/ou le traitement superficiel de denrées alimentaires, notamment de chair à saucisse, en utilisant une matière plastique présentant des propriétés élastique de type feuille, la denrée alimentaire, également sous forme de produit semi-fini, étant entourée et scellée avec la matière plastique, dans lequel un ensemble composé d'un, de préférence plusieurs tubes de remplissage espacés, s'étendant de préférence parallèlement dans un plan et ayant des sections identiques ou différentes, étant en liaison côté entrée de remplissage avec un dispositif d'arrivée de denrée alimentaire, le matériau en feuille étant introduit de façon continue ou discontinue des deux côtés du plan du tube de remplissage,
le matériau en feuille fourni étant ensuite relié dans la direction longitudinale entre les tubes de remplissage et dans les zones de bord, en entourant celles-ci étroitement et hermétiquement,
un joint de scellement transversal étant réalisé avant la première opération de remplissage,
l'opération de remplissage démarrant, la denrée alimentaire est pressée dans l'interstice entre feuilles, une contre-pression étant instaurée pour réaliser un emballage dépourvu d'air emprisonné par l'intermédiaire du matériau en feuille élastique et de la commande de la vitesse relative entre la feuille et la sortie du tube de remplissage, puis un autre joint de scellement transversal étant réalisé pour conclure une opération de remplissage en fonction de la taille de l'emballage et/ou de la quantité remplie, puis une nouvelle étape de remplissage débutant,
**caractérisé en ce que**, pendant l'opération de remplissage, la denrée alimentaire ou le matériau de remplissage est chargé uniformément en produits de couleur, de saveur et/ou de décoration au moyen d'une buse d'injection présente sur la sortie respective du tube de remplissage, les tubes de remplissage étant réalisés pour cela à double paroi et étant constitués de deux tubes concentriques qui présentent un interstice pour acheminer les produits de couleur, de saveur et/ou de décoration.

2. Procédé selon la revendication 1, **caractérisé en ce que**, pour obtenir l'élasticité souhaitée de la feuille, celle-ci est chauffée avant et/ou pendant l'opération de remplissage.

3. Procédé selon la revendication 1 ou 2, **caractérisé en ce que** ; pour donner la forme ou stabiliser la forme, les tuyaux de feuille se formant son entourés pendant le remplissage par une gaine rigide de type coque.

4. Procédé selon la revendication 3, **caractérisé en ce que** la gaine se compose de deux demi-coques complémentaires.

5. Procédé selon l'une des revendications précédentes, **caractérisé en ce que** l'opération de remplissage est effectuée avec le soutien d'une dépression.

6. Procédé selon la revendication 3 ou 4, **caractérisé en ce que** la gaine stabilise les feuilles remplies pour réaliser précisément le scellement transversal.

7. Procédé selon l'une des revendications précédentes, **caractérisé en ce qu'**entre les joints de scellement longitudinaux et/ou transversaux, une perforation est réalisée en vue d'une séparation en emballages individuels ou groupés.

8. Procédé selon l'une des revendications précédentes, **caractérisé en ce que** les faces intérieures des feuilles sont traitées avant le remplissage du produit avec un mélange de préférence chauffé d'un agent de traitement et d'un matériau porteur, le mélange étant ensuite consolidé par refroidissement.

9. Procédé selon la revendication 8, **caractérisé en ce que**, lors de la conservation du produit par traitement thermique, le mélange d'agent de traitement et de matériau porteur passe temporairement à l'état liquide et il se produit ainsi une répartition homogène souhaitée sur la surface du produit.

10. Procédé selon la revendication 8 ou 9, **caractérisé en ce qu'**après l'application du mélange chauffé d'agent de traitement et de matériau porteur sur les feuilles, leur température est réduite par insufflation d'air frais, afin d'obtenir la consolidation souhaitée du mélange sur la surface de la feuille.

11. Procédé selon l'une des revendications 8 à 10, **caractérisé en ce que** le mélange prend à température ambiante et au-dessous une consistance pâteuse à épaisse et passe à l'état liquide en cas de chauffage.

12. Procédé selon l'une des revendications 8 à 11, **caractérisé en ce que** l'agent de traitement est une poudre ou un gaz qui réagit avec l'humidité contenue dans le produit, laquelle sert alors de matériau porteur, et forme une couche de surface.
